# FASCICULE DE BREVET EUROPEEN

(11) **EP 4 263 307 B1**
(45) Date de publication et mention de la délivrance du brevet: **21.08.2024**
(21) Numéro de dépôt: 21815240.3
(22) Date de dépôt: 04.11.2021
(51) Int. Cl.: B60W 30/16, B60W 50/14, B60W 50/00

(54) **PROCÉDÉ ET DISPOSITIF DE RÉGULATION DE VITESSE D'UN VÉHICULE AUTONOME**
VERFAHREN UND VORRICHTUNG ZUR REGELUNG DER GESCHWINDIGKEIT EINES AUTONOMEN FAHRZEUGS
METHOD AND DEVICE FOR REGULATING THE SPEED OF AN AUTONOMOUS VEHICLE

(30) Priorité: 17.12.2020 FR 2013450
(43) Date de publication de la demande: 25.10.2023
(73) Titulaire: Stellantis Auto SAS, 78300 Poissy (FR)
(72) Inventeur: VIVET, Luc, 75016 PARIS 16 (FR); OUANEZAR, Sofiane, 78580 Maule (FR)
(86) Numéro de dépôt international: PCT/FR2021/051947
(87) Numéro de publication internationale: WO 2022/129716

(56) Documents cités:
- EP-A1- 3 604 066
- EP-A1- 3 699 632
- US-A1- 2011 040 467
- US-A1- 2020 276 972
- US-B2- 10 328 938

## Description

déposée le 17/12/2020. L'invention est dans le domaine des systèmes d'aide à la conduite de véhicule autonome. En particulier, l'invention concerne une régulation de vitesse d'un véhicule autonome par un régulateur de vitesse adaptatif.

On entend par « accélération » d'un véhicule une variation d'une vitesse du véhicule par unité de temps. Cette accélération est positive ou négative. Une décélération est une accélération négative. On entend par « véhicule » tout type de véhicule tel qu'un véhicule automobile, un cyclomoteur, une motocyclette, un robot de stockage dans un entrepôt, etc. On entend par « conduite autonome » d'un « véhicule autonome » tout procédé apte à assister la conduite du véhicule. Le procédé peut ainsi consister à diriger partiellement ou totalement le véhicule ou à apporter tout type d'aide à une personne physique conduisant le véhicule. Le procédé couvre ainsi toute conduite autonome, du niveau 0 au niveau 5 dans le barème de l'OICA, pour Organisation International des Constructeurs Automobiles.

Un régulateur de vitesse véhicule adaptatif, ou ACC (de l'acronyme anglais « Adaptative Cruise Control »), est un système ADAS connu qui régule une vitesse du véhicule et un temps inter-véhiculaire, le temps inter-véhiculaire représentant une durée séparant le passage de l'avant ou de l'arrière de deux véhicules successifs sur une même voie de circulation. Par exemple, le temps inter-véhiculaire est un paramètre prédéterminé par le conducteur ou par défaut selon une préconisation de la réglementation en vigueur (2 secondes par exemple). Une simple relation relie le temps inter-véhiculaire à une distance inter-véhiculaire par la vitesse du véhicule. Un ACC d'un véhicule autonome comprend généralement un RADAR ou un LIDAR qui sont aptes à détecter un véhicule précédant, dit véhicule cible, et à mesurer la distance inter-véhiculaire entre le véhicule autonome et le véhicule cible. Une vitesse et accélération du véhicule cible sont également mesurées ou déterminées. L'ACC est alors apte à déterminer le temps inter-véhiculaire à partir de la distance inter-véhiculaire et d'une vitesse du véhicule autonome. Cependant, lorsque le véhicule cible décélère pour s'arrêter avec une forte décélération (accélération négative), à cause du retard dû à la réception de données mesurées, aux temps de calculs des consignes et aux actionneurs (de l'ordre de 500 ms), la distance inter-véhiculaire n'est pas respectée. Cela est d'autant plus marqué lorsque la vitesse est faible (inférieure à 50 km/h). Le véhicule autonome s'approche alors trop brusquement du véhicule cible générant un sentiment d'inconfort psychologique pour un occupant du véhicule et générant parfois l'enclenchement d'un freinage d'urgence.

On connait par le document US 2020/276972 A1 un dispositif de contrôle de véhicule de la vitesse longitudinale d'un véhicule en fonction de l'environnement. On connait par le document US 2011/040467 A1 un système de régulation de vitesse adaptatif de véhicule, le véhicule circulant sur autoroute. On connait par le document US 10328938B2 système de contrôle de vitesse adaptatif.

Un objet de la présente invention est de remédier au problème précité, en particulier de gagner en réactivité et d'améliorer le confort psychologique d'un occupant du véhicule autonome.

A cet effet, un premier aspect de l'invention concerne un procédé de régulation de vitesse adaptatif d'un véhicule autonome, dit égo-véhicule, ledit procédé comportant les étapes de :
- Activation du régulateur de vitesse adaptatif, ledit régulateur de vitesse adaptatif étant fondée sur une accélération consigne calculée à partir d'un temps inter-véhiculaire consigne prédéterminé, ledit temps inter-véhiculaire définissant une distance entre ledit égo-véhicule et un véhicule cible devant ledit véhicule autonome ;
- Réception d'informations relatives audit véhicule cible, dites informations cibles, lesdites informations cibles caractérisant une distance dudit véhicule cible par rapport audit égo-véhicule, dite distance cible, et une accélération dudit véhicule cible, dite accélération cible ;
- Réception d'informations relatives audit égo-véhicule, dites informations égo-véhicule, lesdites informations égo-véhicule caractérisant une vitesse dudit égo-véhicule, dite égo-vitesse ;
- Détermination d'un temps inter-véhiculaire calculé à partir desdites informations cible et desdites informations égo-véhicule ;
- Détermination d'un signal d'alerte à partir desdites informations cible et desdites informations égo-véhicule, ledit signal d'alerte étant dans un état actif lorsque ledit temps inter-véhiculaire calculé est inférieure à un pourcentage prédéterminé dudit temps inter-véhiculaire consigne prédéterminé ;
- Si ledit signal d'alerte est dans un dit état actif et si ladite accélération cible est inférieure à ladite accélération consigne calculée, alors ledit procédé comporte en outre une étape de substitution de ladite accélération consigne dudit régulateur de vitesse par ladite accélération cible.

Ainsi, lorsque le temps inter-véhiculaire est inférieure à un pourcentage du temps inter-véhiculaire prédéterminé et lorsque l'accélération cible est inférieure à l'accélération consigne calculée, le véhicule autonome commence à s'approcher trop brusquement du véhicule cible. Le régulateur de vitesse régule la vitesse du véhicule autonome selon l'accélération du véhicule cible, et donc décélère le véhicule autonome plus fortement que si le régulateur de vitesse régule la vitesse du véhicule autonome selon l'accélération consigne calculée. Le véhicule autonome s'approche alors du véhicule cible moins brusquement, la distance entre l'égo-véhicule et le véhicule cible est plus grande. Il n'y plus besoin d'enclencher un freinage d'urgence. Les occupants de l'égo-véhicule ressentent une décélération plus importante dès des premiers instants et se sentent alors rassurés par une bonne prise en compte du véhicule cible. Le véhicule autonome est alors plu réactif.

Avantageusement, ledit signal d'alerte est dans un état actif lorsqu'également ladite accélération cible est inférieure à un seuil de décélération maximum prédéterminé. Ainsi, la substitution de l'accélération consigne calculée par l'accélération cible n'est effectuée que lorsque la décélération cible est importante et lorsqu'une réactivité forte est nécessaire.

Avantageusement, ledit signal d'alerte est dans un état actif lorsqu'également ladite égo-vitesse est inférieure à un seuil égo-vitesse prédéterminé.

Ainsi, on garantit qu'il n'y pas de substitution de l'accélération consigne calculée par l'accélération cible lorsque l'égo-vitesse est élevé (supérieure à 50 km/h par exemple) et où la régulation de vitesse est moins sensible au retards dû à la réception de données mesurées, aux temps de calculs des consignes et aux actionneurs.

Avantageusement, lesdites informations cibles caractérisent également une vitesse dudit véhicule cible, dite vitesse cible, et dans lequel ledit signal d'alerte est dans un état actif lorsque ladite vitesse cible est inférieure à ladite égo-vitesse.

Ainsi, on garantit qu'il n'y pas de substitution de l'accélération consigne calculée par l'accélération cible lorsque la vitesse du véhicule cible est supérieure à l'égo-vitesse, et que donc la distance inter-véhiculaire augmente.

Avantageusement, ledit pourcentage prédéterminé est une valeur comprise entre 60 et 120% ;
Ainsi, plus la valeur du pourcentage prédéterminé est élevée, plus la régulation de vitesse est anticipative, ce qui type le comportement routier de l'égo-véhicule.

Avantageusement, ledit signal d'alerte est transmis par au moins un canal de communication sans-fil à au moins une infrastructure, à au moins un véhicule, et/ou à au moins un dispositif apte à recevoir des informations transmises par un canal de communication sans-fil.

Ayant détecté une situation de décélération forte, le véhicule autonome communique, par exemple, la situation détectée à d'autres véhicules pour les prévenir et afin qu'ils adaptent leurs comportements à la situation comme ralentir par exemple.

Un deuxième aspect de l'invention concerne un dispositif comprenant une mémoire associée à au moins un processeur configuré pour mettre en oeuvre le procédé selon le premier aspect de l'invention.

L'invention concerne aussi un véhicule comportant le dispositif.

L'invention concerne aussi un programme d'ordinateur comprenant des instructions adaptées pour l'exécution des étapes du procédé, selon le premier aspect de l'invention, lorsque ledit programme est exécuté par au moins un processeur.

D'autres caractéristiques et avantages de l'invention ressortiront de la description des modes de réalisation non limitatifs de l'invention ci-après, en référence aux figures annexées, sur lesquelles :
[Fig. 1] illustre schématiquement un dispositif, selon un exemple particulier de réalisation de la présente invention.
[Fig. 2] illustre schématiquement un procédé de régulation de vitesse d'un véhicule autonome, selon un exemple particulier de réalisation de la présente invention.

L'invention est décrite ci-après dans son application, non limitative, au cas d'un véhicule automobile autonome circulant sur une route ou sur une voie de circulation. D'autres applications telles qu'un robot dans un entrepôt de stockage ou encore une motocyclette sur une route de campagne sont également envisageables.

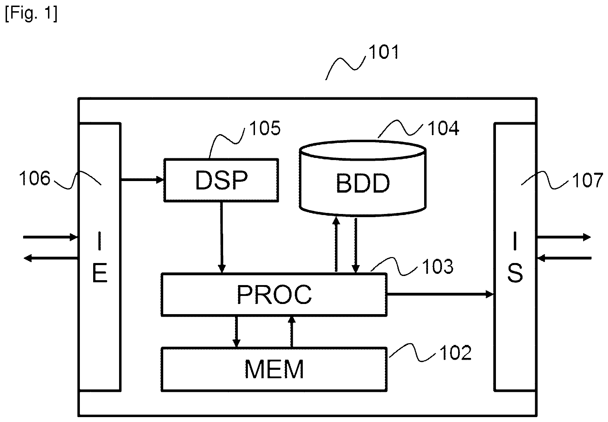

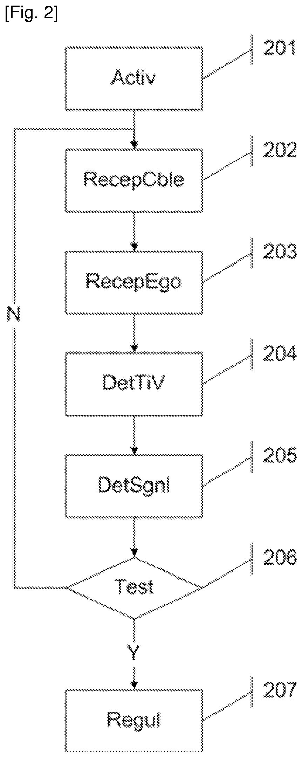

La figure 1 représente un exemple de dispositif 101 compris dans le véhicule, dans un réseau (« cloud ») ou dans un serveur. Ce dispositif 101 peut être utilisé en tant que dispositif centralisé en charge d'au moins certaines étapes du procédé décrit ci-après en référence à la figure 2. Dans un mode de réalisation, il correspond à un calculateur de conduite autonome.

Dans la présente invention, le dispositif 101 est compris dans le véhicule.

Ce dispositif 101 peut prendre la forme d'un boitier comprenant des circuits imprimés, de tout type d'ordinateur ou encore d'un téléphone mobile (« smartphone »).

Le dispositif 101 comprend une mémoire vive 102 pour stocker des instructions pour la mise en oeuvre par un processeur 103 d'au moins une étape du procédé tel que décrit ci-avant. Le dispositif comporte aussi une mémoire de masse 104 pour le stockage de données destinées à être conservées après la mise en oeuvre du procédé.

Le dispositif 101 peut en outre comporter un processeur de signal numérique (DSP) 105. Ce DSP 105 reçoit des données pour mettre en forme, démoduler et amplifier, de façon connue en soi ces données.

Le dispositif 101 comporte également une interface d'entrée 106 pour la réception des données mises en oeuvre par le procédé selon l'invention et une interface de sortie 107 pour la transmission des données mises en oeuvre par le procédé selon l'invention.

La figure 2 illustre schématiquement un procédé de régulation de vitesse d'un véhicule autonome, selon un exemple particulier de réalisation de la présente invention.

L'étape 201, « Activ », est une étape d'activation dudit régulateur de vitesse adaptatif, ledit régulateur de vitesse adaptatif étant fondée sur une accélération consigne calculée à partir d'un temps inter-véhiculaire consigne prédéterminé, ledit temps inter-véhiculaire définissant une distance entre ledit égo-véhicule et un véhicule cible devant ledit véhicule autonome.

Classiquement, un régulateur de vitesse adaptatif calcule à chaque instant l'accélération, l'accélération consigne, que doit avoir l'égo-véhicule afin que l'égo-véhicule suive une vitesse prédéterminée en respectant un temps inter-véhiculaire prédéterminé. L'accélération est appliquée par un organe moto-propulseur (moteur, frein ...). La vitesse prédéterminée et le temps inter-véhiculaire sont renseignés par exemple par un occupant, ou un conducteur, du véhicule autonome. La régulation de vitesse modifie la vitesse de l'égo-véhicule afin de respecter le temps inter-véhiculaire prédéterminé.

L'étape 202, « RecepCble », est une étape de réception d'informations relatives audit véhicule cible, dites informations cibles, lesdites informations cibles caractérisant une distance dudit véhicule cible par rapport audit égo-véhicule, dite distance cible, et une accélération dudit véhicule cible, dite accélération cible. Dans un mode opératoire, lesdites informations cibles caractérisent également une vitesse dudit véhicule cible, dite vitesse cible.

La distance cible, la vitesse cible et l'accélérations cibles sont des informations obtenues périodiquement par un traitement de mesures issues de capteurs embarqués présents dans un véhicule avec un régulateur de vitesse adaptatif classique. Dans un mode opératoire, l'interface d'entrée 106 du dispositif mettant en oeuvre l'invention, reçoit ces informations.

L'étape 203, « RecepEgo », est une étape de réception d'informations relatives audit égo-véhicule, dites informations égo-véhicule, lesdites informations égo-véhicule caractérisant une vitesse dudit égo-véhicule, dite égo-vitesse.

L'égo-vitesse est une information obtenue périodiquement par un traitement de mesures issues de capteurs embarqués présents dans un véhicule avec un régulateur de vitesse adaptatif classique. Dans un mode opératoire, l'interface d'entrée 106 du dispositif mettant en oeuvre l'invention, reçoit ces informations.

L'étape 204, « DetTiV », est une étape de détermination d'un temps inter-véhiculaire calculé à partir desdites informations cible et desdites informations égo-véhicule. Le temps inter-véhiculaire est obtenu périodiquement par la multiplication de la distance inter-véhiculaire par l'égo-vitesse. Ce temps inter-véhiculaire est calculé périodiquement par exemple par le dispositif 101.

L'étape 205, « DetSgnl », est une étape de détermination d'un signal d'alerte à partir desdites informations cible et desdites informations égo-véhicule, ledit signal d'alerte étant dans un état actif lorsque ledit temps inter-véhiculaire calculé est inférieure à un pourcentage prédéterminé dudit temps inter-véhiculaire consigne prédéterminé. Ledit pourcentage prédéterminé est une valeur comprise entre 60 et 120%, par exemple 80%. D'autres valeurs sont possibles.

Avantageusement, le signal d'alerte est dans un état actif pour une combinaison des conditions suivantes :
- ledit temps inter-véhiculaire calculé est inférieure à un pourcentage prédéterminé dudit temps inter-véhiculaire consigne prédéterminé ;
- ladite accélération cible est inférieure à un seuil de décélération maximum prédéterminé. Par exemple, le seuil de décélération maximum prédéterminé est de -3 m/s². D'autres valeurs sont possible ;
- ladite égo-vitesse est inférieure à un seuil égo-vitesse prédéterminé. Par exemple, ledit seuil égo-vitesse prédéterminé est de 50 km/h ou de 30 mk/h ; d'autres valeurs sont possibles ;
- lorsque ladite vitesse cible est inférieure à ladite égo-vitesse.

L'étape 206, « Test », est une étape de vérification que ledit signal d'alerte est dans un dit état actif et si ladite accélération cible est inférieure à ladite accélération consigne calculée. Dans l'affirmatif l'égo-véhicule se rapproche trop brusquement du véhicule cible, la distance inter-véhiculaire n'est plus respecté, et le véhicule cible décélère plus que l'égo-véhicule. Il y a nécessité de modifier très rapidement l'accélération consigne calculée par un régulateur de vitesse véhicule classique.

L'étape 207, « Regul », est une étape de substitution de ladite accélération consigne dudit régulateur de vitesse par ladite accélération cible. L'accélération consigne calculée par un régulateur de vitesse véhicule classique est insuffisant.

L'accélération consigne calculée est donc remplacée par l'accélération cible qui est plus faible. Le régulateur de vitesse prend alors en compte l'accélération cible comme accélération consigne. Cela décélère plus vite l'égo-véhicule apportant ainsi les avantages précédemment cités.

Avantageusement, ledit signal d'alerte est transmis par au moins un canal de communication sans-fil à au moins une infrastructure, à au moins un véhicule, et/ou à au moins un dispositif apte à recevoir des informations transmises par un canal de communication sans-fil afin de prévenir de la déclaration. Par exemple, un autre véhicule autonome recevant ce signal d'alerte et qui suit l'égo-véhicule pourra anticiper un ralentissement et donc une décélération.

La présente invention ne se limite pas aux formes de réalisation décrites ci-avant à titre d'exemples ; elle s'étend à d'autres variantes selon les revendications annexées. Ainsi, on a également décrit ci-avant des communications sans-fils. Les nouveaux standards de télécommunication sans-fil comportent des spécifications dédiées à des applications automobiles. Ainsi, des canaux de communication sans-fil courte portée véhicule à tout, dit canaux V2X, ont été spécifiés.

Un premier type de canal V2X est fondé sur les standards wifi (IEEE 802.11p) et prend en charge des communications entre véhicules et entre véhicules et infrastructures.

Un deuxième type de canal V2X est fondé sur les standards cellulaires, et notamment sur la norme 5G. Ce deuxième type de canal V2X prend en charge des communications entre véhicules, entre véhicules et infrastructures ou encore entre véhicule et réseau cellulaire. Ce type de canal existant en parallèle des canaux cellulaires classiques, il est notamment appelé « sidelink », pour lien de côté en français, ou encore « PC5 ».

Les communications V2X peuvent également être mises en oeuvre par un dispositif utilisateur.

## Revendications

1. Procédé de régulation de vitesse d'un véhicule autonome, dit égo-véhicule, comportant un régulateur de vitesse adaptatif, ledit procédé comportant les étapes de :
• Activation (201) dudit régulateur de vitesse adaptatif, ledit régulateur de vitesse adaptatif étant fondée sur une accélération consigne calculée à partir d'un temps inter-véhiculaire consigne prédéterminé, ledit temps inter-véhiculaire définissant une distance entre ledit égo-véhicule et un véhicule cible devant ledit véhicule autonome ;
• Réception (202) d'informations relatives audit véhicule cible, dites informations cibles, lesdites informations cibles caractérisant une distance dudit véhicule cible par rapport audit égo-véhicule, dite distance cible, et une accélération dudit véhicule cible, dite accélération cible ;
• Réception (203) d'informations relatives audit égo-véhicule, dites informations égo-véhicule, lesdites informations égo-véhicule caractérisant une vitesse dudit égo-véhicule, dite égo-vitesse ;
• Détermination (204) d'un temps inter-véhiculaire calculé à partir desdites informations cible et desdites informations égo-véhicule ;
• Détermination (205) d'un signal d'alerte à partir desdites informations cible et desdites informations égo-véhicule, ledit signal d'alerte étant dans un état actif lorsque ledit temps inter-véhiculaire calculé est inférieure à un pourcentage prédéterminé dudit temps inter-véhiculaire consigne prédéterminé ;
ledit procédé étant **caractérisé en ce que**
• Si (206) ledit signal d'alerte est dans l'état actif et si ladite accélération cible est inférieure à ladite accélération consigne calculée, alors ledit procédé comporte en outre une étape de substitution (207) de ladite accélération consigne calculée dudit régulateur de vitesse par ladite accélération cible.

2. Procédé selon la revendication 1, dans lequel ledit signal d'alerte est dans l'état actif lorsqu'également ladite accélération cible est inférieure à un seuil de décélération maximum prédéterminé ;

3. Procédé selon l'une des revendications précédentes, dans lequel ledit signal d'alerte est dans l'état actif lorsqu'également ladite égo-vitesse est inférieure à un seuil égo-vitesse prédéterminé ;

4. Procédé selon l'une des revendications précédentes, dans lequel lesdites informations cibles caractérisent également une vitesse dudit véhicule cible, dite vitesse cible, et dans lequel ledit signal d'alerte est dans l'état actif lorsqu'également ladite vitesse cible est inférieure à ladite égo-vitesse ;

5. Procédé selon l'une des revendications précédentes, dans lequel ledit pourcentage prédéterminé est une valeur comprise entre 60 et 120% ;

6. Procédé selon l'une des revendications précédentes, dans lequel ledit signal d'alerte est transmis par au moins un canal de communication sans-fil à au moins une infrastructure, à au moins un véhicule, et/ou à au moins un dispositif apte à recevoir des informations transmises par un canal de communication sans-fil.

7. Dispositif (101) comprenant une mémoire (102) associée à au moins un processeur (103) configuré pour mettre en oeuvre le procédé selon l'une des revendications précédentes.

8. Véhicule comportant le dispositif selon la revendication précédente.

9. Programme d'ordinateur comprenant des instructions adaptées pour l'exécution des étapes du procédé selon l'une des revendications 1 à 6 lorsque ledit programme est exécuté par au moins un processeur (103).

## Patentansprüche

1. Verfahren zur Regelung der Geschwindigkeit eines autonomen Fahrzeugs, sogenanntes Ego-Fahrzeug, umfassend eine adaptive Geschwindigkeitsregelung, wobei das Verfahren die Schritte umfasst:
• Aktivierung (201) der adaptiven Geschwindigkeitsregelung, wobei die adaptive Geschwindigkeitsregelung auf einer eingestellten Beschleunigung basiert, die aus einer vorgegebenen eingestellten Fahrzeugzwischenzeit berechnet wird, wobei die Fahrzeugzwischenzeit einen Abstand zwischen dem Ego-Fahrzeug und einem vorausfahrenden Zielfahrzeug definiert des autonomen Fahrzeugs;
• Empfang (202) von Informationen bezüglich des Zielfahrzeugs, sogenannte Zielinformationen, wobei die Zielinformationen einen Abstand des Zielfahrzeugs relativ zu dem Ego-Fahrzeug, genannt Zielentfernung, und eine Beschleunigung des Zielfahrzeugs, genannt Zielbeschleunigung, charakterisieren;
• Empfang (203) von Informationen bezüglich des Ego-Fahrzeugs, Ego-Fahrzeug-Informationen genannt, wobei die Ego-Fahrzeug-Informationen eine Geschwindigkeit des Ego-Fahrzeugs, Ego-Geschwindigkeit genannt, charakterisieren;
• Bestimmung (204) einer Fahrzeugzwischenzeit, die aus den Zielinformationen und den Ego-Fahrzeuginformationen berechnet wird;
• Bestimmung (205) eines Warnsignals aus den Zielinformationen und den Ego-Fahrzeuginformationen, wobei das Warnsignal in einem aktiven Zustand ist, wenn die berechnete Fahrzeugzwischenzeit kleiner als ein vorgegebener Prozentsatz der Fahrzeugzwischenzeit - vorgegebenes Fahrzeug - ist Anweisung; wobei das Verfahren **dadurch gekennzeichnet** ist
• Wenn (206) das Alarmsignal im aktiven Zustand ist und die Zielbeschleunigung geringer ist als die berechnete Sollbeschleunigung, dann umfasst das Verfahren weiterhin einen Schritt des Ersetzens (207) der berechneten Sollbeschleunigung der Geschwindigkeitsreglergeschwindigkeit Zielbeschleunigung.

2. Verfahren nach Anspruch 1, wobei das Alarmsignal im aktiven Zustand ist, wenn auch die Zielbeschleunigung geringer als ein vorgegebener maximaler Verzögerungsschwellenwert ist;

3. Verfahren nach einem der vorhergehenden Ansprüche, wobei das Alarmsignal im aktiven Zustand ist, wenn auch die Eigengeschwindigkeit kleiner als ein vorgegebener Eigengeschwindigkeitsschwellenwert ist;

4. Verfahren nach einem der vorhergehenden Ansprüche, bei dem die Zielinformationen auch eine Geschwindigkeit des Zielfahrzeugs charakterisieren, die Zielgeschwindigkeit genannt wird, und bei dem das Alarmsignal im aktiven Zustand ist, wenn auch die Zielgeschwindigkeit bei dem Ego niedriger ist - Geschwindigkeit;

5. Verfahren nach einem der vorhergehenden Ansprüche, bei dem der vorgegebene Prozentsatz ein Wert zwischen 60 und 120 % ist;

6. Verfahren nach einem der vorhergehenden Ansprüche, bei dem das Alarmsignal über mindestens einen drahtlosen Kommunikationskanal an mindestens eine Infrastruktur, an mindestens ein Fahrzeug und/oder an mindestens ein Gerät, das in der Lage ist, übermittelte Informationen zu empfangen, übertragen wird über einen drahtlosen Kommunikationskanal.

7. Vorrichtung (101), umfassend einen Speicher (102), dem mindestens ein Prozessor (103) zugeordnet ist, der zur Durchführung des Verfahrens nach einem der vorhergehenden Ansprüche konfiguriert ist.

8. Fahrzeug umfassend die Vorrichtung nach dem vorhergehenden Anspruch.

9. Computerprogramm mit Anweisungen, die zur Ausführung der Schritte des Verfahrens nach einem der Ansprüche 1 bis 6 geeignet sind, wenn das Programm von mindestens einem Prozessor (103) ausgeführt wird.

## Claims

1. Method for regulating the speed of an autonomous vehicle, called an ego-vehicle, comprising an adaptive cruise control, said method comprising the steps of:
• Activation (201) of said adaptive cruise control, said adaptive cruise control being based on a set acceleration calculated from a predetermined set inter-vehicular time, said inter-vehicular time defining a distance between said ego-vehicle and a target vehicle in front of said autonomous vehicle;
• Receipt (202) of information relating to said target vehicle, called target information, said target information characterizing a distance of said target vehicle relative to said ego-vehicle, called target distance, and an acceleration of said target vehicle, called target acceleration;
• Receipt (203) of information relating to said ego-vehicle, called ego-vehicle information, said ego-vehicle information characterizing a speed of said ego-vehicle, called ego-speed;
• Determination (204) of an inter-vehicular time calculated from said target information and said ego-vehicle information;
• Determination (205) of an alert signal from said target information and said ego-vehicle information, said alert signal being in an active state when said calculated inter-vehicular time is less than a predetermined percentage of said inter-vehicular time -predetermined vehicle instruction; said method being **characterized in that**
• If (206) said alert signal is in the active state and if said target acceleration is less than said calculated setpoint acceleration, then said method further comprises a step of substituting (207) said calculated setpoint acceleration of said speed regulator. speed by said target acceleration.

2. Method according to claim 1, wherein said alert signal is in the active state when also said target acceleration is less than a predetermined maximum deceleration threshold;

3. Method according to one of the preceding claims, wherein said alert signal is in the active state when also said ego-speed is less than a predetermined ego-speed threshold;

4. Method according to one of the preceding claims, in which said target information also characterizes a speed of said target vehicle, called target speed, and in which said alert signal is in the active state when also said target speed is lower at said ego-speed;

5. Method according to one of the preceding claims, in which said predetermined percentage is a value between 60 and 120%;

6. Method according to one of the preceding claims, in which said alert signal is transmitted by at least one wireless communication channel to at least one infrastructure, to at least one vehicle, and/or to at least one device capable of receiving information transmitted by a wireless communication channel.

7. Device (101) comprising a memory (102) associated with at least one processor (103) configured to implement the method according to one of the preceding claims.

8. Vehicle comprising the device according to the preceding claim.

9. Computer program comprising instructions adapted for the execution of the steps of the method according to one of claims 1 to 6 when said program is executed by at least one processor (103).
